(19) Europäisches Patentamt
European Patent Office
Office européen des brevets

(11) Veröffentlichungsnummer : **0 000 125**
**B1**

(12) # EUROPÄISCHE PATENTSCHRIFT

(45) Veröffentlichungstag der Patentschrift : **02.12.81**

(51) Int. Cl.³ : **C 07 F 9/09**, B 01 F 17/14

(21) Anmeldenummer : **78100114.4**

(22) Anmeldetag : **07.06.78**

(54) **Oberflächenaktive Phosphorsäureester und deren Verwendung.**

(30) Priorität : **15.06.77 DE 2726854**

(43) Veröffentlichungstag der Anmeldung : **10.01.79 (Patentblatt 79/01)**

(45) Bekanntmachung des Hinweises auf die Patenterteilung : **02.12.81 Patentblatt 81/48**

(84) Benannte Vertragsstaaten : **CH DE FR GB**

(56) Entgegenhaltungen :
**DE - B - 1 061 763**
**DE - C - 971 212**
**FR - A - 1 076 808**
**FR - A - 1 401 507**
**FR - A - 2 139 816**

(73) Patentinhaber : **BAYER AG**
**Zentralbereich Patente, Marken und Lizenzen**
**D-5090 Leverkusen 1, Bayerwerk (DE)**

(72) Erfinder : **Reitz, Gunther, Dr.**
**Andreas-Gryphius-Strasse 20**
**D-5000 Köln 80 (DE)**
Erfinder : **Boehmke, Günther, Dr.**
**Kurt-Schumacher-Ring 152**
**D-5090 Leverkusen 1 (DE)**
Erfinder : **Jakobs, Karlhans**
***An der Jüch 55***
**D-5060 Bergisch-Gladbach 2 (DE)**

**EP 0 000 125 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Oberflächenaktive Phosphorsäureester und deren Verwendung

Gegenstand der Erfindung sind in Wasser lösbare Phosphorsäureester, die aus

a) Alkoholen der Formel

HO—B—OH (I)

worin

B einen Alkylenrest mit 2 bis 10 C-Atomen bedeutet, der durch 1 bis 2 hydroxylgruppen substituiert sein kann und/oder durch

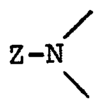

mit Z = gegebenenfalls durch OH substituiertes $C_1$-$C_4$-Alkyl

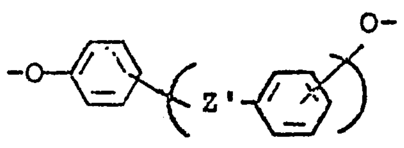

0 oder 1

mit Z' = $SO_2$, $C_1$-$C_3$-Alkylen unterbrochen sein kann, oder für einen der isomeren Cyclohexylen-Reste oder einen Rest der Formel

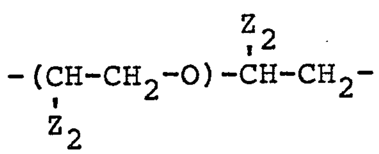

1 bis n

mit $Z_2$ = H, $CH_3$, und n = 50, bevorzugt 10, steht, ihren Äthern, Epoxiden oder 3-Chlorpropan-1,2-diol,

b) Carbonsäuren der Formel

HOOC—A—COOH (II)

ihren Anhydriden, Säurehalogeniden oder Estern, worin

A für Alkylen mit 1 bis 10 C-Atomen, Alkenylen mit 2 bis 10 C-Atomen, einen der isomeren Phenylen-, Cyclohexylenreste, wobei die Alkylenreste durch eine Sulfonsäuregruppe substituiert sein können, steht und

c) Phosphorsäure, ihren Anhydriden, Halogeniden oder Oxyhalogeniden

bei 120-260 °C während einer Reaktionszeit bis zu 48 Stunden hergestellt werden, wobei das Molverhältnis von a : b : c = 1 : 0 bis 1,5 : 0,05 bis 1,5 beträgt, und die Summe der Molzahlen von b und c das 2/3- bis 3/2-fache von a ist, und anschließend gegebenenfalls in ihre Alkali-, Erdalkali- oder Ammoniumsalze überführt werden, wobei Ammonium die Formel

$\overset{\oplus}{N}(R_2)_4$ hat

mit $R_2$ = H, $C_{1-14}$-Alkyl, bevorzugt $C_{1-6}$-Alkyl, das durch Hydroxyl substituiert sein kann, Phenyl-$C_{1-6}$-Alkyl, das im Phenylring durch Methyl substituiert sein kann.

Gegenstand der Erfindung sind außerdem die Herstellung der Phosphorsäureester und ihre Verwendung als Dispergiermittel, Verflüssigungsmittel, Egalisiermittel, Emulgatoren, Builder oder Sequestriermittel für Waschmittel.

Als Verbindungen der Gruppe a) seien beispielsweise genannt : Äthan-1,2-diol, Propan-1,2-diol, Propan-1,3-diol, Butan-1,2-diol, Butan-1,3-diol, Butan-2,3-diol, Butan-1,4-diol, 3-Chlor-propan-1,2-diol, die einzelnen isomeren Pentandiole, Hexandiol, z.B. Hexan-1,6-diol, sowie die einzelnen isomeren Diole der höheren Alkane. Weiterhin seien höherwertige Alkohole wie Glycerin, Trishydroxymethylalkane wie Trishydroxymethylpropan, weiterhin Zuckeralkohole, $C_{1-4}$-Alkyldiäthanolamine, $C_{1-4}$-Alkyldiisopropanolamine, Triäthanolamin, Triisopropanolamin und Pentaaerythrit genannt. Es seien auch aromatische Alkohole genannt wie die drei isomeren Bis-(2-hydroxyäthoxy)-benzole, und Bis-(2-hydroxypropoxy)-benzole, weiterhin 4,4'-Bis-(2-hydroxyäthoxy)-diphenylsulfon, 4,4'-Bis-(2-hydroxypropoxy)-diphenylsulfon, die Bis-(hydroxyäthoxy)-phenyl-alkane bzw. Bis-(hydroxypropoxy-phenyl)-alkane. Es seien auch cycloaliphatische Alkohole genannt wie z.B. Cyclohexan-1,2-diol, Cyclohexan-1,4-diol, Polyglykole seien ebenfalls genannt ; z.B. Diäthylenglykol, Triäthylenglykol, Tetraäthylenglykol, Pentaäthylenglykol, Polyäthylenglykol, Di-propylenglykol, Tri-, Tetra-, Penta- und Polypropylenglykol sowie Epoxide wie Äthylenoxid, Propylenoxid, Butylenoxid, Epichlorhydrin.

Von diesen Verbindungen sind besonders bevorzugt : Äthan-1,2-diol, Propan-1,2-diol, Butan-1,3-diol, Butan-1,4-diol, 3-Chlorpropan-1,2-diol, Hexan-1,6-diol, Glycerin, Tris-hydroxymethyl-propan, Diäthanolamin, Triäthanolamin, Bis-(2-hydroxyäthoxy)-benzol, Bis-(2-hydroxyäthoxy-diphenyl)-propan, Cyclohexandiol, Diäthylenglykol, Triäthylenglykol, Tetraäthylenglykol, Äthylenoxid, Propylenoxid, Epichlorhydrin.

Verbindungen der Gruppe b) sind z.B. : Malonsäure, Bernsteinsäure, Glutarsäure, Adipinsäure, Pimelinsäure, Korksäure, Azelainsäure, Sebacinsäure, Fumarsäure, Maleinsäure, Methylenmalonsäure, Äthylidenmalonsäure, Glutaconsäure, Itaconsäure, Mesaconsäure, Citraconsäure, Muconsäure, Hexen-2 (oder -3)-disäure, Phthalsäure, Isophthalsäure, Terephthalsäure, Cyclohexandicarbonsäuren, Sulfobernsteinsäure sowie deren Säureanhydrid- und Säurehalogenidformen und Ester.

Davon seien besonders genannt : Maleinsäure-

anhydrid, Phthalsäureanhydrid, Bernsteinsäureanhydrid, Malonsäure, Glutarsäure, Adipinsäure, Sebacinsäure, Fumarsäure, Isophthalsäure, Terephthalsäure, Terephthalsäuredimethylester, Cyclohexan-1,4-dicarbonsäure, Sulfobernsteinsäure.

Verbindungen der Gruppe c) sind z.B.: Phosphorsäure, in wäßriger Lösung, sirupös oder kristallin, Polyphosphorsäure, Metaphosphorsäure, Phosphorpentoxid, $POCl_3$, $P_2O_3Cl_4$, $PCl_5$. Bevorzugt sind davon Phosphorsäure, kristallin, sirupös oder in wäßriger Lösung, Polyphosphorsäure, $P_2O_5$ und $POCl_3$.

Ein bevorzugtes Verhältnis von Verbindungen der Gruppen a : b : c liegt bei 1 : 0,04 bis 1,2 : 0,07 bis 1,3 und ein besonders bevorzugtes Verhältnis bei 1 : 0,07 bis 1,1 : 0,15 bis 1,25.

Die erfindungsgemäßen Phosphorsäureester werden hergestellt durch beliebige Verknüpfung der Strukturelemente (a), (b) und (c), die — jedes für sich — gleich oder verschieden sein können, wobei obige Maßgaben gelten.

Bei einer bevorzugten Ausführungsform werden die Alkohole (I) und die Carbonsäuren (II) mit Orthophosphorsäure umgesetzt. Die Orthophosphorsäure kann dabei kristallin, sirupös oder in konzentrierter wäßriger Lösung, z.B. in 40 bis 100 %iger Lösung, eingesetzt werden.

Beispielsweise kann nach bekannten Verfahren die Orthophosphorsäure zunächst mit den Alkoholen (I) zu Verbindungen der Formel

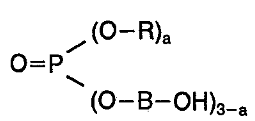

(III)

worin

R und B oben genannte Bedeutung haben,

a 1 oder 2 ist und

R vorzugsweise H ist, umgesetzt werden.

Die Verbindung (III) wird dann mit 0 bis 1 Mol, vorzugsweise ohne weitere Phosphorsäure und mit 0,05 bis 10 Mol Carbonsäure (II), vorzugsweise 0,1 bis 4 mol und mit 0 bis 10 Mol Alkohol (I), vorzugsweise mit 0 bis 4 Mol, umgesetzt, wobei die Molzeiten jeweils pro Mol der Verbindung (III) gerechnet werden. Dabei ist die Summe der Molzahlen des bei der Synthese von Verbindung (III) eingesetzten Diols (I) und des bei der weiteren Umsetzung eingesetzten Diols (I) das 2/3- bis 3/2-fache, bevorzugt das 3/4- bis 4/3-fache der Summe der Molzahlen von eingesetzter Phosphorsäure (oder Derivat) und eingesetzter Dicarbonsäure (II). Die Reaktion geschieht bei 120 bis 260 °C, vorzugsweise bei 150 bis 200 °C, gegebenenfalls unter Vakuum, wobei das Reaktionswasser überdestilliert und die Ester entstehen. Es kann auch zunächst die Carbonsäure (II) mit den Alkoholen (I) zu den Estern (IV) umgesetzt werden,

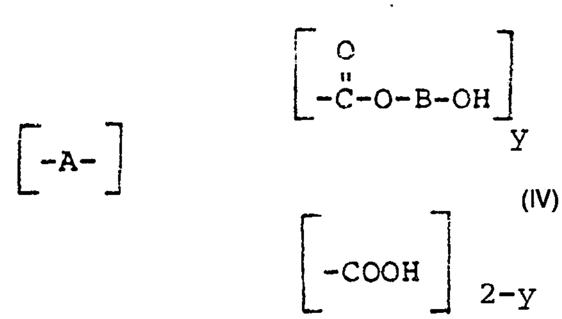

(IV)

wobei

A und B die obengenannte Bedeutung haben und

Y 1 oder 2 ist.

Die Umsetzung geschieht nach an sich bekannten Verfahren unter saurer Katalyse von Beispielsweise Mineralsäuren wie $H_3PO_4$, HCl, $H_2SO_4$ oder von Verbindungen wie p-Toluolsulfonsäure, Lewis-Säuren, Leichtmetall- und Schwermetalloxiden oder -salzen, wie z.B. Halogeniden. Dabei wird das Reaktionswasser abdestilliert.

Die Verbindungen (IV) reagieren dann mit Orthophosphorsäure (eventuell in der Salzform) und/oder Verbindungen (III) und gegebenenfalls Alkoholen (I) im Molverhältnis 1 : 0,1 bis 20 : 0,1 bis 20 : 0 bis 20, besonders im Molverhältnis 1 : 0,25 bis 10 : 0,25 bis 10 : 0 bis 10. Die Summe der Molzahlen des bei der Synthese von Verbindung (IV) eingesetzten Diols (I) und des bei der weiteren Umsetzung eingesetzten Diols (I) ist das 2/3- bis 3/2-fache, bevorzugt das 3/4- bis 4/3-fache der Summe der Molzahlen von eingesetzter Dicarbonsäure (II) und eingesetzter Phosphorsäure. Die Reaktion geschieht bei Temperaturen von 120 bis 260 °C, bevorzugt von 150 bis 200 °C zu den erfindungsgemäßen Estern, wobei, wenn nötig unter Vakuum, das Reaktionswasser abdestilliert.

Bevorzugt ist eine Verfahrensweise, bei der man Verbindungen der Formel (IV), in denen b = 2 ist, mit 0,25 bis 10 Mol Orthophosphorsäure, gerechnet pro Mol (IV), umsetzt.

Es ist ebenfalls möglich, Verbindungen (IV) (b = 1) mit Verbindungen (III) (a = 1) im obengenannten Verhältnis umzusetzen.

Weiterhin ist es möglich, Verbindungen (IV) (mit b = 1) sowie Orthophosphorsäure und Alkohol (I) im obengenannten Molverhältnis zur Reaktion zu bringen.

Eine bevorzugte Verfahrensweise besteht ferner darin, Orthophosphorsäure, Alkohole (I) und carbonsäuren (II) im Molverhältnis 0,07 bis 1,3 : 1 : 0,04 bis 1,2, bevorzugt 0,15 bis 1,25 : 1 : 0,07 bis 1,1 gleichzeitig zur Reaktion zu bringen, wobei die Summe der Molzahlen von Orthophosphorsäure und Dicarbonsäure (II) das 2/3- bis 3/2-fache, bevorzugt das 3/4- bis 4/3-fache der Molzhal des Alkohols (I) ist. Dabei geschieht zuerst eine Bildung der Monoester oder Diester vom Typ der Verbindungen (III) und (IV), indem Temperatur und Druck so reguliert werden, daß die Verbindungen (I) und (II) nicht sieden oder

sich zersetzen, und wobei dann später auf vorzugsweise 150 bis 200 °C erwärmt wird und gegebenenfalls unter Vakuum die Veresterung vervollständigt wird.

Alle beschriebenen Veresterungsreaktionen werden sauer katalysiert, wobei im einfachsten und bevorzugten Fall die an der Reaktion teilnehmende Orthophosphorsäure oder die Verbindung (III) als Katalysator dient. Es lassen sich auch andere Katalysatoren verwenden, z.B. Mineralsäuren wie $H_2SO_4$, HCl, weiterhin organische Sulfonsäuren, z.B. Toluolsulfonsäure oder auch Lewis-Säuren wie Schwermetall- und Leichtmetalloxide und -salze, z.B. -halogenide.

Als Reaktionsmedium dienen bevorzugt die eingesetzten Verbindungen (I), (II), (III) oder (IV) selber.

Die Entfernung des Reaktionswassers erfolgt entweder destillativ, gegebenenfalls im Vakuum, oder durch azeotrope Destillation, wobei bevorzugt Xylol, Perchloräthylen und Dichlorbenzol als Schlepper dienen können.

Mann kann in den oben beschriebenen Reaktionen zur Darstellung der Verbindungen (III), (IV) und ihrer Weiterveresterung sehr vorteilhaft anstelle der freien Orthophosphorsäure oder der freien Carbonsäure(II) auch aktivierte Formen dieser Säuren einsetzen. Als solche aktivierten Formen seien insbesondere die Säureanhydride genannt, z.B. alle möglichen entwässerten Formen der Phosphorsäure, also wasserfreie Ortho-, Pyro-, Poly- und Metaphosphorsäure und Phosphorpentoxid, sowie verschiedene Anhydridformen der Carbonsäuren (II), beispielsweise intermolekulare Anhydride.

Ein bevorzugtes Verfahren besteht darin, daß man zunächst aus einer der genannten entwässerten Formen der Phosphorsäure die Verbindungen (III) synthetisiert und diese Verbindung in einem weiteren Reaktionsschritt mit Alkoholen (I) und Anhydriden obergenannter Art der Carbonsäuren (II) unter Erhitzen und Vakuum zu den erfindungsgemäßen Polyestern umsetzt. Die Reaktionsbedingungen für die Umsetzung der Alkohole (I) mit den entwässerten Formen der Orthophosphorsäure werden dabei so gehalten, daß sich aus den Reaktionskomponenten bei möglichst niederer Temperatur eine homogene Mischung bildet, was auf die Bildung der Verbindungen vom Typ (III) hinweist. Da die Umsetzung mit Phosphorpentoxid zuweilen sehr energisch verläuft, verwendet man hier vorteilhaft ein Verdünnungsmittel, z.B. Toluol, Kresol, Perchloräthylen, Acetonitril oder Mono- bzw. Dichlorbenzol, in dem zunächst das Phosphorpentoxid suspendiert wird. Zur Suspension läßt man dann den Alkohol (I) zutropfen oder zulaufen. Vorteilhaft kann man auch zur Suspension die Carbonsäuren (II) oder ihre Anhydride, eventuell portionsweise, zugeben und dann den Alkohol (I) zulaufen oder zutropfen lassen. Ebenso kann man die Verbindungen (III), die aus den entwässerten Formen der Phosphorsäure oder aus normaler Orthophosphorsäure gebildet worden sind, anschließend mit Anhydriden von Carbonsäuren (IV) der genannten Art sowie gegebenenfalls weiteren Alkohol (I) zur Reaktion bringen und zu Polyestern umsetzen. Dazu wird unter Vakuum auf 120 bis 260 °C, vorzugsweise 150 bis 200 °C, erhitzt, wobei Reaktionswasser abdestilliert.

Eine bevorzugte Verfahrensweise besteht weiterhin darin, daß man aus den Anhydriden der Carbonsäuren (II) und aus den Alkoholen (I), gegebenenfalls unter saurer Katalyse mit einem der genannten Katalysatoren, die Verbindungen (IV) synthetisiert, in denen b vorzugsweise 2 ist, und diese Verbindungen (IV) weiter mit $H_3PO_4$ oder der entwässerten Formen davon und gegebenenfalls mit weiterem Alkohol (I) zur Reaktion bringt. Hier werden, gegebenenfalls nach Umsetzung der Alkohole (I) in die Monoesterstufe, durch Anlegen von Vakuum und Erhitzen auf vorzugsweise 150 bis 200 °C die erfindungsgemäßen Polyester gebildet.

Anstelle der Phosphorsäureanhydride oder der Anhydride der Carbonsäure (II) kann man auch die entsprechenden Phosphorsäurehalogenide, z.B. $POCl_3$, $P_2O_3Cl_4$, $PCl_5$, oder die Carbonsäurehalogenide, besonders die Chloride, einsetzen.

Als Beispiele der Verbindungen (III), die nach einem der oben beschriebenen Verfahren dargestellt werden, seien insbesondere genannt die Phosphorsäuremono- und -bis-ester von folgenden Alkoholen (II) : Glykol, Propan-1,2-diol, Butan-1,4-diol, Butan-1,3-diol, 3-Chlorpropan-1,2-diol, Hexan-1,6-diol, Glycerin, Methyl-diäthanolamin, Äthyldiäthanolamin, Triäthanolamin, 1,2-Bis-2(hydroxyäthoxy)-benzol, 1,4-Bis-2(hydroxyäthoxy)-benzol, 4,4'-Bis(2-hydroxy-äthoxy)-diphenylsulfon, Bis-(2-hydroxyäthoxyphenyl)-äthan, Bis-(2-hydroxyäthoxyphenyl)-propan, Cyclohexan-1,4-diol, Diäthylenglykol, Triäthylenglykol, Tetraäthylenglykol, Pentaäthylenglykol, Dipropylenglykol, Tripropylenglykol, Tetrapropylenglykol und Pentapropylenglykol.

Mono- und Diester der Verbindungen (IV), die besonders erwähnt werden sollen, werden aus den obengenannten Alkoholen und folgenden Carbonsäuren (II) gebildet: Malonsäure, Bernsteinsäure, Maleinsäure, Fumarsäure, Glutarsäure, Adipinsäure, Phthalsäure, Terephthalsäure, Cyclohexandicarbonsäure, Sulfobernsteinsäure, Kork- und Sebacinsäure.

Die Polyester (I) lassen sich ebenfalls durch Umesterung herstellen, wobei die Phosphorsäuren und/oder die Carbonsäuren (II) als Ester von leichtflüchtigen Alkoholen, z.B. Methanol, Äthanol, Isopropanol, Propanol oder Butanol eingesetzt werden. Diese Umesterungsreaktion kann sauer oder alkalisch katalysiert werden. Unter den Estern, die eingesetzt werden können, sei insbesondere Terephthalsäuredimethylester genannt.

Die auf die vorstehend beschriebenen Arten hergestellten erfindungsgemäßen Polyester fallen nach einer Reaktionsdauer von bis zu 48 Stunden, vorzugsweise bis zu 15 Stunden, als gelblich bis braun gefärbte Produkte an, die in der Hitze rührbar oder zähviskos und in der Kälte

fest sind. Sie lassen sich rein isolieren, z.B. durch Ausgießen der heißen Masse und Erkalten, oder es lassen sich Lösungen herstellen, etwa in organischen Lösungsmitteln oder bevorzugt in Wasser. Zur Auflösung in Wasser werden die Substanzen mit vorzugsweise dem ein- bis fünffachen ihres Gewichtes an Wasser versetzt und in der Weise mit einer Base oder Lauge, vorzugsweise mit Alkali- oder Erdalkalilauge neutralisiert, daß der pH-Wert nicht über 8 steigt. Zum Lösen geht man am besten so vor, daß man den am Boden des Reaktionsgefäßes befindlichen und erstarrten Polyester (I) mit der berechneten Menge $H_2O$ überschichtet, dieses Wasser ständig rührt und unter Erwärmen auf 20 bis 50 °C durch Zugabe kleiner Mengen konzentrierter Natronlauge auf einen pH-Wert von 5 bis 8 hält. Dabei löst sich der Polyester (I) auf. Zum Schluß wird auf einen pH-Wert von vorzugsweise 5 bis 7 eingestellt, wobei 20 bis 50 %ige Lösungen erhalten werden. Die wäßrigen Lösungen können zu trockenen Pulvern eingedampft werden.

Die Carbonsäuren (II) sind in der Regel mit zwei Mol der Alkohole (I) verbunden, ebenso ist ein bestimmter Anteil der Orthophosphorsäure an zwei P-OH-Gruppierungen mit den Alkoholen (I) zu Phosphorsäureestern verknüpft. Ein weiterer Anteil der Phosphorsäure liegt in der Monoesterstruktur vor und nur ein geringer Anteil eventuell als Phosphorsäuretriester. Demzufolge sieht man im IR-Spektrum die den Carbonestern entsprechenden Absorptionsbanden bei 1 730 bis 1 800 nm sowie die den P-O-C-Bindungen der Phosphorsäureester entsprechenden Banden bei 1 020 bis 1 120 nm. Ein bestimmter kleiner Anteil der Phosphorsäure kann auch über eine P-O-P-Bindung pyrophosphatartig oder polyphosphatartig gebunden sein.

Die Wasserlöslichkeit der Verbindungen resultiert daher, daß man den Phosphorsäuremolekülen in der Regel eine oder eventuell zwei P-OH-Gruppierungen frei vorliegen, die entweder direkt oder nach Deprotonierung mit Basen oder Laugen die Verbindungen in Wasser löslich machen.

Bei den oben beschriebenen Veresterungsreaktionen können sich auch einige Nebenreaktionen abspielen, z.B. Verätherung oder Eliminierungen an den Alkoholen (I). Bei sachgemäßer Reaktionsdurchführung nehmen diese Reaktionen nicht überhand und verhindern nicht die Synthese der erfindungsgemäßen Polyester.

Die bei der Veresterung mit der Phosphorsäure häufig auftretenden Verfärbungen nach braun bis schwarz lassen sich durch Zusatz von Reduktionsmitteln, vorzugsweise von niederwertigen Phosphorderivaten, z.B. von $H_3PO_3$ oder ihren Salzen, weitgehend verhindern.

Die erfindungsgemäßen Ester sind in Form der Neutralsalze hydrolysebeständig und über mehrere Monate in wäßrigen Lösungen haltbar; nach zehnstündigem Kochen in Wasser bei pH 7 verlieren sie nicht merklich an Wirksamkeit. Die Esterbindungen werden jedoch bakteriell angegriffen, so daß sie biologisch abbaubar sind.

Die Ester finden Anwendung als Dispergiermittel für organische und anorganische Substanzen in vorzugsweise wäßrigem Medium. Bevorzugt ist die Verwendung als Dispergiermittel für Farbstoffe und Pigmente.

Sie können zur Herstellung von Farbstofformierungen dienen oder zur Dispergierung von Farbstoffen im Färbebad verwendet werden.

Sie sind auch verwendbar als Emulgatoren für organische Substanzen in Wasser sowie als Egalisiermittel in der Färberei, z.B. beim Färben von Polyesterfasern.

Die Ester können weiterhin verwendet werden zur « Verflüssigung » konzentrierter Gemische aus organischen oder anorganischen Feststoffen und Wasser. Die « Verflüssigung » dieser Gemische besteht in einer Herabsetzung der Viskosität bis zur leichten Rührbarkeit und Gießbarkeit. Als Feststoffe seien beispielsweise genannt organische Farbstoffe, anorganische Pigmente, z.B. Metalloxide, Zement, Beton und Schlamm.

Außerdem können sie als Builder anstelle von Polyphosphaten in Waschmitteln eingesetzt werden.

Aus der FR-PS 1 401 507 sind Phosphorsäureester bekannt, die aus mehrwertigen Alkoholen, durch Kohlenwasserstoffreste substituierten Bernsteinsäure (derivaten) mit mehr als 50 Kohlenstoffatomen und Phosphorsäure (derivaten) hergestellt werden. Diese Phosphorsäureester sind nicht in Wasser lösbar, und sie sind nicht als Dispergiermittel für Farbstoffe und Pigmente in wäßrigem Medium geeignet.

Aus der FR-PS 1 076 808 sind tertiäre Phosphorsäureester partieller Carbonsäureester mehrwertiger Alkohole bekannt. Sie sind den erfindungsgemäßen Phosphorsäureestern in der Dispergierwirkung in wäßrigen Systemen unterlegen. Beispielsweise sind 10 ml einer 1,5 %igen wäßrigen, auf pH 7 neutralisierten Einstellung des nach Beispiel 3 der französischen Patentschrift hergestellten Esters nicht in der Lage, 10 g Zinkoxid zu dispergieren. Es entsteht vielmehr eine nicht gießbare zähe Masse. Demgegenüber entsteht bei Einsatz des nächstvergleichbaren Produktes der vorliegenden Erfindung eine dünnflüssige Dispersion.

Aus der FR-A 2 139 816 sind ungesättigte Phosphorsäureester bekannt, die aus Polyolen, Polyphosphorsäure oder $P_2O_5$ und ungesättigten Carbonsäuren und gegebenenfalls außerdem gesättigten Carbonsäuren hergestellt werden. Sie dienen als Adhäsionspromotoren in Überzugsmassen und sind nicht als Dispergiermittel in wäßrigen Medium geeignet. Zum Beispiel wird bei Einsatz von 10 ml einer 1,5 %igen wäßrigen auf pH 7 neutralisierten Einstellung des Esters von Beispiel 1 der französischen Anmeldung im Gegensatz zum Einsatz der nächstliegenden Verbindung der vorliegenden Erfindung keine brauchbare Zink-Dispersion erhalten.

Aus der US-PS 3 544 614 sind Reaktionsprodukte aus mehrwertigen Alkoholen, Di- oder Polycarbonsäuren und Phosphorsäure mit dem Molverhältnis der Phosphorsäureester der vorliegenden Erfindung bekannt. Die nächstvergleichbaren Ester der US-Patentschrift werden in den Beispielen IX und X in den Spaten 1/2 beschrieben. Im Gegensatz zu den erfindungsgemäßen Estern werden sie bei 110 °C während einer Reaktionszeit von 330 bzw. 150 Stunden hergestellt. Daraus resultieren andere Strukturen mit anderen Eigenschaften. Die Ester der Beispiele IX und X zeigen keinerlei dispergierende Wirkung auf Metalloxide oder Farbstoffe in wäßrigem Medium. Sie sind vielmehr Schmiermittel mit Rost verhindernder Wirkung.

Beispiel 1

47 g Phosphorpentoxid un 33 g $H_3PO_4$ werden im Reaktionskolben unter kurzem Erhitzen vermischt, abgekühlt und mit 124 g Glykol sowie 1 g kristallisiertem Natriumhypophosphit versetzt. Es wird langsam unter Rühren bis 180 °C erhitzt und innerhalb von 3 Stunden ca. 35 g einer wäßrigen Flüssigkeit abdestilliert. Nach erneutem Abkühlen werden 98 g Maleinsäureanhydrid zugesetzt und bei Temperaturen von 190 bis 200 °C in 6 Stunden unter langsam stärker werdendem Vakuum weitere 10 g Flüssigkeit abdestilliert. Die heiße Schmelze wird erkalten gelassen und mit 1 l Wasser überschichtet. Die wäßrige Schicht wird gerührt und tropfenweise mit 50 %iger Natronlauge versetzt, so daß der pH-Wert bei 5-8 bleibt. Zum Schluß wird auf pH 5-6 eingestellt. Man erhält eine ca. 20 %ige Lösung.

Beispiel 2

30 g Polyphosphorsäure (82 % $P_2O_5$) und 100 g Maleinsäure-bis-(hydroxyäthylester) werden unter Rühren 5 bis 6 Stunden auf 160 °C erhitzt und unter Vakuum wäßrige Flüssigkeit abdestilliert. Anschließend wird mit $H_2O$ und konzentrierter Natronlauge bis pH 5 bis 6 20 %ig gelöst.

Beispiel 3

100 g Maleinsäure-bis-(hydroxyäthylester) und 57 g $H_3PO_4$, 85 %ig in $H_2O$, sowie 3 g Phosphorige Säure werden in einem Reaktionskolben über einen Zeitraum von 12 Stunden auf 185 bis 195 °C erhitzt. Dabei destillieren ca. 30 g wäßrige Flüssigkeit ab. Gegen Ende der Reaktion wird zunehmend stärkeres Vakuum angelegt, mit $H_2O$ und konzentrierter Natronlauge stellt man eine 28 %ige Lösung von pH 5 bis 6 her.

Beispiel 4

47 g Glycerin, 41 g Polyphosphorsäure (82 % $P_2O_5$) und 1 g Phosphorige Säure werden 30 Minuten lang bei 120 °C gerührt, dann wird abgekühlt und 74 g Phthalsäureanhydrid zugegeben und wieder auf 150 °C unter langsam stärker werdendem Vakuum erhitzt, wobei wäßrige Flüssigkeit abdestilliert. Nach ca. 14 Stunden bei 150 °C wird in der Kälte mit $H_2O$ und konzentrierter Natronlauge zu einer 35 %igen Lösung von pH 5 bis 6 gelöst.

Beispiel 5

31 g Glykol, 44 g Phthalsäureanhydrid und 10 g Maleinsäureanhydrid werden bei 200 Torr auf 120 bis 130 °C unter Rühren erhitzt, wobei $H_2O$ abdestilliert. Nach 1,5 Stunden werden 17 g $H_3PO_4$ zugegeben und innerhalb von 10 Stunden wird bei stärker werdendem Vakuum nach und nach unter weiterer Destillation bis auf 180 bis 190 °C erhitzt. Durch Zugabe von $H_2O$ und konzentrierter Natronlauge wird eine 40 %ige Lösung von pH 5 bis 6 hergestellt.

Beispiel 6

15,5 g Glykol, 23,4 g Glycerin, 74 g Phthalsäureanhydrid und 29 g $H_3PO_4$, 85 %ig, werden unter Rühren bei zunächst schwachem, später stärkerem Vakuum innerhalb von 8 Stunden langsam auf 180 bis 190 °C erhitzt, wobei wäßrige Flüssigkeit abdestilliert. Mit $H_2O$ und konzentrierter Natronlauge wird eine wäßrige Lösung hergestellt.

Beispiel 7

49 g Maleinsäureanhydrid und 76 g Propan1,3-diol werden unter Rühren auf 90 °C 30 Minuten lang erhitzt. Dann gibt man 58 g 85 %ige $H_3PO_4$ und 2 g Phosphorige Säure zu. Es wird ein Vakuum von 200 Torr angelegt und unter Abdestillation einer wäßrigen Flüssigkeit im Intervall von 10 bis 20 °C pro Stunde auf 180 °C erhitzt, bei 180 bis 190 °C noch einige Zeit weiter gerührt und langsam das Vakuum verstärkt und dann nach dem Abkühlen mit $H_2O$ und konzentrierter Natronlauge eine 25 %ige Lösung von pH 5 bis 6 hergestellt.

Beispiel 8

49 g Maleinsäureanhydrid und 90 g Butan-1,3-diol werden bei 90 °C einige Zeit gerührt, dann werden 58 g 85 %ige $H_3PO_4$ und 2 g Phosphorige Säure zugegeben. Es wird mit 10 bis 20 °C pro Stunde auf 170 bis 190 °C unter Vakuum und Abdestillation von wäßriger Flüssigkeit erhitzt und noch einige Stunden bei dieser Temperatur gehalten. Dann wird mit $H_2O$ und konzentrierter Natronlauge eine 20 %ige Lösung von pH 6 bis 7 hergestellt.

Beispiel 9

49 g Maleinsäureanhydrid und 76 g Propan-1,2-diol werden bei 90 °C unter Rühren einige Minuten erhitzt, dann werden 58 g 85 %ige $H_3PO_4$ und 2 g Phosphorige Säure zugegeben. Unter zunächst schwachem, später stärkerem Vakuum wird im Intervall von 10 bis 20 °C pro Stunde auf 170 bis 190 °C erhitzt, wobei wäßrige Flüssigkeit abdestilliert. Es wird einige Stunden bei 170 bis 180 °C weiter gerührt und dann nach dem Abkühlen mit $H_2O$ und konzentrierter Natronlauge zu einer 20 %igen Lösung von pH 5 bis 6 gelöst.

Beispiel 10

49 g Maleinsäureanhydrid und 118 g Hexan-1,6-diol werden bei 90 °C einige Minuten gerührt, dann werden 58 g 85 %ige $H_3PO_4$ unde 2 g Phosphorige Säure zugegeben. Unter zunächst schwächerem, später stärkerem Vakuum wird im Intervall von 10 bis 20 °C pro Stunde auf 170 bis 190 °C erhitzt, wobei wäßrige Flüssigkeit abdestilliert. Es wird einige Stunden bei 170 bis 180 °C weitergerührt und weiterdestilliert und dann nach dem Abkühlen mit $H_2O$ und konzentrierter Natronlauge zu einer 25 %igen Lösung von pH 5 bis 6 gelöst.

Beispiel 11

49 g Maleinsäureanhydrid und 106 g Diäthylenglykol werden bei 90 °C einige Minuten gerührt, dann werden 58 g 85 %ige $H_3PO_4$ und 2 g Phosphorige Säure zugegeben. Unter zunächst schwachem, später stärkerem Vakuum wird im Intervall von 10 bis 20 °C pro Stunde auf 170 bis 190 °C erhitzt, wobei wäßrige Flüssigkeit abdestilliert. Es wird einige Stunden bei 170 bis 180 °C weitergerührt und weiterdestilliert und dann nach dem Abkühlen mit $H_2O$ und konzentrierter Natronlauge eine 25 %ige Lösung von pH 5 bis 6 hergestellt.

Beispiel 12

49 g Maleinsäureanhydrid und 149 g Triäthanolamin werden bei 90 °C einige Minuten gerührt, dann werden 58 g 85 %ige Phosphorsäure und 2 g Phosphorige Säure zugegeben. Unter zunächst schwachem, später stärkerem Vakuum wird im Intervall von 10 bis 20 °C pro Stunde auf 170 bis 190 °C geheizt, wobei wäßrige Flüssigkeit abdestilliert. Es wird einige Stunden bei 170 bis 180 °C weitergerührt und weiterdestilliert und dann, nach dem Abkühlen, mit $H_2O$ und konzentrierter Natronlauge eine 25 %ige Lösung von pH 6 bis 7 hergestellt.

Beispiel 13

49 g Maleinsäureanhydrid und 150 g Triäthylenglykol werden bei 90 °C einige Minuten gerührt, dann werden 58 g 85 %ige Phosphorsäure und 2 g Phosphorige Säure zugegeben. Bei zunächst schwachem, später stärkerem Vakuum wird langsam auf 170 bis 190 °C geheizt, einige Stunden so gehalten und wäßrige Flüssigkeit abdestilliert. Nach dem Abkühlen wird mit $H_2O$ und konzentrierter Natronlauge eine 25 %ige Lösung von pH 5 bis 6 hergestellt.

Beispiel 14

49 g Maleinsäureanhydrid und 194 g Tetraäthylenglykol werden bei 90 °C einige Minuten gerührt, dann werden 58 g 85 %ige Phosphorsäure und 2 g Phosphorige Säure zugegeben. Unter zunächst schwachem, später stärkerem Vakuum wird langsam auf 170 bis 190 °C geheizt, einige Stunden so gehalten und wäßrige Flüssigkeit abdestilliert. Nach dem Abkühlen wird mit $H_2O$ und konzentrierter NaOH eine 25 %ige Lösung von pH 5 bis 6 hergestellt.

Beispiel 15

49 g Maleinsäureanhydrid und 116 g Cyclohexan-1,4-diol werden bei 90 °C einige Minuten gerührt, dann werden 58 g 85 %ige Phosphorsäure und 2 g Phosphorige Säure zugegeben. Unter zunächst schwächerem, später stärkerem Vakuum wird langsam auf 170 bis 190 °C geheizt, einige Stunden so gehalten und wäßrige Flüssigkeit abdestilliert. Nach dem Abkühlen wird mit $H_2O$ und konzentrierter Natronlauge eine 25 %ige Lösung von pH 5 bis 6 hergestellt.

Beispiel 16

49 g Maleinsäureanhydrid und 62 g Glykol werden bei 90 °C einige Minuten gerührt, dann werden 58 g 85 % Phosphorsäure und 2 g Phosphorige Säure zugegeben. Unter zunächst schwächerem, s-äter stärkerem Vakuum wird langsam auf 170 bis 190 °C erhitzt, einige Stunden so gehalten und wäßrige Flüssigkeit abdestilliert. Mit $H_2O$ und konzentrierter Natronlauge wird eine 50 %ige Lösung von pH 7 hergestellt, dazu werden 128 g 40 %ige $NaHSO_3$-Lösung gegeben und es wird 5 Stunden zum Rückfluß erhitzt. Die entstandende Lösung ist etwa 43 %ig.

Beispiel 17

66 g Glutarsäure und 62 g Glykol werden bei 90 °C einige Minuten gerührt, dazu werden 58 g 85 %ige Phosphorsäure und 2 g Phosphorige Säure zugegeben. Unter zunächst schwächerem, später stärkerem Vakuum wird langsam auf 180 bis 190 °C erhitzt, einige Stunden so gehalten und wäßrige Flüssigkeit abdestilliert. Mit $H_2O$ und konzentrierter Natronlauge wird eine 25 %ige Lösung hergestellt.

Beispiel 18

73 g Adipinsäure und 62 g Glykol werden bei 90 °C einige Minuten gerührt, dann werden 58 g 85 %ige Phosphorsäure und 2 g Phosphorige Säure zugegeben. Unter zunächst schwachem, später stärkerem Vakuum wird langsam auf 180 bis 190 °C erhitzt und einige Stunden so gehalten, wobei wäßrige Flüssigkeit abdestilliert. Nach dem Abkühlen wird mit $H_2O$ und konzentrierter Natronlauge eine 20 %ige Lösung von pH 6 bis 7 hergestellt.

Beispiel 19

52 g Malonsäure und 62 g Glykol werden bei 90 °C einige Minuten gerührt, dann werden 58 g 85 %ige Phosphorsäure und 2 g Phosphorige Säure zugegeben. Unter zunächst schwachem, später stärkerem Vakuum wird auf 180 bis 190 °C erhitzt, wobei wäßrige Flüssigkeit abdestilliert und einige Stunden so gehalten. Mit $H_2O$ und konzentrierter Natronlauge wird eine 20 %ige Lösung von pH 6 bis 7 hergestellt.

Beispiel 20

50 g Bernsteinsäureanhydrid und 62 g Glykol werden bei 90 °C einige Minuten gerührt, dann werden 58 g 85 %iger Phosphorsäure und 2 g Phosphorige Säure zugegeben. Unter zunächst schwachem, später stärkerem Vakuum wird auf 180 bis 190 °C erhitzt, wobei wäßrige Flüssigkeit abdestilliert und einige Stunden so gehalten wird. Mit $H_2O$ und konzentrierter Natronlauge wird eine 20 %ige Lösung vom pH 6 bis 7 hergestellt.

Beispiel 21

100 g Cyclohexandicarbonsäure und 62 g Glykol werden bei 90 °C einige Minuten gerührt, dann werden 58 g 85 %ige Phosphorsäure und 2 g Phosphorige Säure zugegeben. Unter zunächst schwachem, später stärkerem Vakuum wird auf 180 bis 190 °C erhitzt und einige Stunden so gehalten, wobei wäßrige Flüssigkeit abdestilliert. Mit $H_2O$ und konzentrierter Natronlauge wird eine 20 %ige Lösung von pH 6 bis 7 hergestellt.

Beispiel 22

116 g 85 %ige Phosphorsäure, 60 g Glykol und 5 g Maleinsäureanhydrid sowie 2 g Phosphorige Säure werden unter Rühren auf 120-130 °C erhitzt, wobei $H_2O$ abdestilliert, anschließend wird auf 180-190 °C weiter erhitzt und zunächst schwaches, später stärkeres Vakuum angelegt. Es destilliert wäßrige Flüssigkeit ab. Mit. $H_2O$ und konzentrierter Natronlauge wird eine 30 %ige Lösung von pH 6-7 hergestellt.

Beispiel 23

116 g 85 %ige Phosphorsäure, 60 Glykol und 7,3 g Adipinsäure sowie 2 g Phosphorige Säure werden in einem Kolben unter Rühren auf 120-130 °C erhitzt, wobei $H_2O$ abdestilliert, anschließend auf 180-190 °C gebracht und zunächst schwaches, später stärkeres Vakuum angelegt. Es destilliert wäßrige Flüssigkeit ab. Mit $H_2O$ und konzentrierter Natronlauge wird eine 30 %ige Lösung von pH 6 bis 7 hergestellt.

Beispiel 24

0,8 g Disperse Red 106 werden mit 400 ml $H_2O$ von 50 °C, das 1 g/l der in den Beispielen 1 bis 23 hergestellten Substanzen enthält, unter Rühren übergossen und 10 Minuten lang zum Kochen gebracht. Danach wird durch ein Rundfilter unter Vakuum filtriert. Das Papierfilter bleibt klar und zeigt keine Farbstoffagglomerisation.

Beispiel 25

10 g Zinkoxid werden mit 10 g einer 1,5 %igen Lösung einer der Substanzen aus den Beispielen 1 bis 23 nach und nach versetzt. Dabei wird ständig gut umgerührt. Es entsteht eine milchig dünnflüssige Mischung. Beim Verdünnen mit $H_2O$ zeigt sich, daß eine stabile Dispersion entstanden ist. Werden 10 g Zinkoxid mit 10 g $H_2O$ entsprechend vermischt, so entsteht eine unrührbare klumpige Masse, die beim Verdünnen mit $H_2O$ kleine stabile Dispersion bildet.

Beispiel 26

10 g Bentonit werden mit 30 ml einer 2 %iger Lösung einer der in den Beispielen 1 bis 23 beschriebenen Substanzen nach und nach verrührt. Es entsteht eine dünnbreiige, gut rührbare Mischung ; gibt man noch 10 ml $H_2O$ dazu und verrührt, ist die Mischung dünnflüssig und gießbar geworden.

Mischt man 10 g Bentonit mit 30 g $H_2O$, so entsteht eine unrührbare, klumpige Masse, die nach Zugabe und Verrühren von weiteren 10 ml $H_2O$ dickbreiig und zäh wird.

**Ansprüche**

1. In Wasser lösbare Phosphorsäureester hergestellt aus mehrwertigen Alkoholen, ihren Äthern oder Epoxiden, gegebenenfalls Dicarbonsäuren, ihren Anhydriden, Säurehalogeniden oder Estern und Phosphorsäuren, ihren Anhydriden, Halogeniden oder Oxyhalogeniden, dadurch gekennzeichnet, daß sie aus

a) Alkoholen der Formel

$$HO—B—OH$$

worin

B einen Alkylenrest mit 2 bis 10 C-Atomen bedeutet, der durch 1 bis 2 Hydroxylgruppen substituiert sein kann und/oder durch

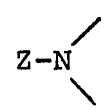

mit Z = gegebenenfalls durch OH substituiertes $C_1$-$C_4$-Alkyl

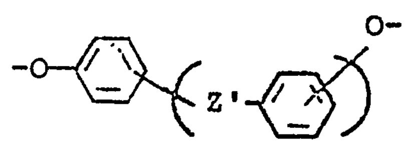

0 oder 1

mit Z′ = $SO_2$, $C_1$-$C_3$-Alkylen unterbrochen sein kann, oder für einen der isomeren Cyclohexylen-Reste oder einen Rest der Formel

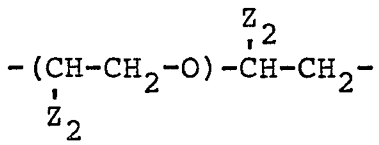

1 bis n

mit $Z_2$ = H, $CH_3$ und n = 50, bevorzugt 10, steht, ihren Äthern, Epoxiden oder 3-Chlorpropan-1,2-diol,

b) Carbonsäuren der Formel

HOOC—A—COOH

ihren Anhydriden, Säurehalogeniden oder Estern, worin

A für Alkylen mit 1 bis 10 C-Atomen, Alkenylen mit 2 bis 10 C-Atomen, einen der isomeren Phenylen-, Cyclohexylenreste, wobei die Alkylenreste durch eine Sulfonsäuregruppe substituiert sein können, steht und

c) Phosphorsäure, ihren Anhydriden, Halogeniden oder Oxyhalogeniden

bei 120-260 °C während einer Reaktionszeit bis zu 48 Stunden hergestellt werden, wobei das Molverhältnis von a : b : c = 1 : 0 bis 1,5 : 0,05 bis 1,5 beträgt, und die Summe der Molzahlen von b und c das 2/3 bis 3/2-fache von a ist, und anschließend gegebenenfalls in ihre Alkali-, Erdalkali- oder Ammoniumsalze überführt werden, wobei Ammonium die Formel

$$\overset{\oplus}{N}(R_2)_4$$ hat

mit $R_2$ = H, $C_{1-14}$-Alkyl, bevorzugt $C_{1-6}$-Alkyl, das durch Hydroxyl substituiert sein kann, Phenyl-($_{1-6}$-Alkyl), das im Phenylring durch Methyl substituiert sein kann.

2. Phosphorsäureester gemäß Anspruch 1, dadurch gekennzeichnet, daß sie aus a) Äthan-1,2-diol, Propan-1,2-diol, Propan-1,3-diol, Butan-1,2-diol, Butan-1,3-diol, Butan-2,3-diol, Butan-1,4-diol, 3-Chlorpropan-1,2-diol, Hexan-1,6-diol, Glycerin, Tris-hydroxymethylpropan, Diäthanolamin, Triäthanolamin, Bis-(2-hydroxyäthoxy)-benzol, Bis-(2-hydroxy-äthoxydiphenyl)-propan, Cyclohexandiol, Diäthylenglykol, Triäthylenglykol, Tetraäthylenglykol, Äthylenoxid oder Propylenoxid und b) Maleinsäureanhydrid, Phthalsäureanhydrid, Bernsteinsäureanhydrid, Malonsäure, Glutarsäure, Adipinsäure, Sebacinsäure, Fumarsäure, Isophthalsäure, Terephthalsäure, Terephthalsäuredimethylester, Cyclohexan-1,4-dicarbonsäure oder Sulfobernsteinsäure und c) Phosphorsäure, Polyphosphorsäure, Phosphorpentoxid oder Phosphoroxychlorid bei 150-200 °C während einer Reaktionszeit bis zu 15 Stunden hergestellt werden, wobei das Molverhältnis von a : b : c = 1 : 0,04 bis 1,2 : 0,07 bis 1,3 beträgt, und die Summe der Molzahlen von b und c das 3/4- bis 4/3-fache von a ist.

3. Verwendung von Phosphorsäureestern gemäß Anspruch 1, als Dispergiermittel, Verflüssigungsmittel, Egalisiermittel, Emulgatoren, Builder in Waschmitteln.

**Claims**

1. Water-soluble phosphoric acid esters prepared from polyhydric alcohols, their ethers or epoxides, in some cases dicarboxylic acids, their anhydrides, acid halides or esters and phosphoric acids, their anhydrides, halides or oxyhalides, characterised in that they are prepared from

a) alcohols of the formula

HO—B—OH

wherein

B denotes and alkylene radical with 2 to 10 C atoms, which can be substituted by 1 to 2 hydroxyl groups and/or can be interrupted by

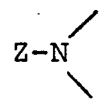

wherein

Z = $C_1$-$C_4$-alkyl which is optionally substituted by OH

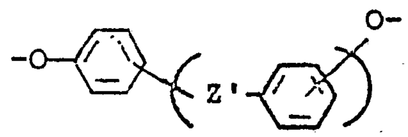

0 or 1

wherein

Z' = $SO_2$ or $C_1$-$C_3$-alkylene or represents one of the isomeric cyclohexylene radicals or a radical of the formula

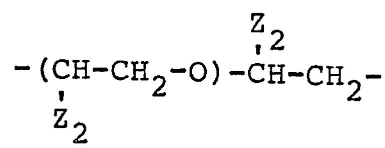

1 to n

wherein

$Z_2$ = H or $CH_3$ and n = 50, but preferably 10, their ethers, epoxides or 3-chloropropane-1,2-diol,

b) carboxylic acids of the formula

HOOC—A—COOH

their anhydrides, acid halides or esters, wherein

A represents alkylene with 1 to 10 C atoms, alkenylene with 2 to 10 C atoms, one of the isomeric phenylene or cyclohexylene radicals, it being possible for the alkylene radicals to be substituted by a sulphonic acid group, and

c) phosphoric acid, its anhydrides, halides, or oxyhalides, at 120-260 °C in the course of a reaction time of up to 48 hours, the molar ratio of

a : b : c being 1 : 0 to 1.5 : 0.05 to 1.5 and the sum of the number of mols of b and c being 2/3 to 3/2 times a, and are then optionally converted into their alkali metal salts, alkaline earth metal salts or ammonium salts, ammonium having the formula

$$\overset{\oplus}{N}(R_2)_4$$

wherein

$R_2$ = H, $C_{1-14}$-alkyl, preferably $C_{1-6}$-alkyl, which can be substituted by hydroxyl, or phenyl-($_{1-6}$-alkyl), which can be substituted by methyl in the phenyl ring.

2. Phosphoric acid esters according to Claim 1, characterised in that they are prepared from a) ethane-1,2-diol, propane-1,2-diol, propane-1,3-diol, butane-1,2-diol, butane-1,3-diol, butane-2,3-diol, butane-1,4-diol, 3-chloro-propane-1,2-diol, hexane-1,6-diol, glycerol, tris-hydroxymethylpropane, diethanolamine, triethanolamine, bis-(2-hydroxyethoxy)-benzene, bis-(2-hydroxyethoxydiphenyl)-propane, cyclohexanediol, diethylene glycol, triethylene glycol, tetraethylene glycol, ethylene oxide or propylene oxide and b) maleic anhydride, phthalic anhydride, succinic anhydride, malonic acid, glutaric acid, adipic acid, sebacic acid, fumaric acid, isophthalic acid, terephthalic acid, terephthalic acid dimethyl ester, cyclohexane-1,4-dicarboxylic acid or sulphosuccinic acid and c) phosphoric acid, polyphosphoric acid, phosphorus pentoxide or phosphorus oxychloride at 150-200 °C in the course of a reaction time of up to 15 hours, the molar ratio of a : b : c being 1 : 0.04 to 1.2 : 0.07 to 1.3, and the sum of the number of mols of b and c being 3/4 to 4/3 times a.

3. Use of phosphoric acid esters according to Claim 1 as dispersing agents, liquefaction agents, levelling agents, emulsifiers and builders in detergents.

**Revendications**

1. Esters d'acide phosphorique solubles dans l'eau, préparés à partir d'alcools polyvalents, de leurs éthers ou de leurs époxydes, le cas échéant d'acides dicarboxyliques, de leurs anhydrides, de leurs halogénures d'acides ou de leurs esters et d'acides phosphoriques, de leurs anhydrides, de leurs halogénures ou de leurs oxyhalogénures, caractérisés par le fait qu'il sont préparés à partir :

a) d'alcools de formule :

HO—B—OH

dans laquelle

B est un reste alkylène ayant 2 à 10 atomes de carbone, qui peut être substitué par un ou deux groupes hydroxyle et/ou peut être interrompu par :

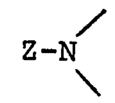

où Z est un groupe alkyle en $C_1$ à $C_4$ éventuellement substitué par OH,

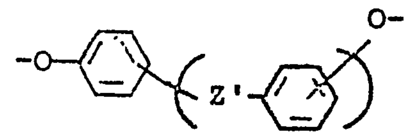

0 ou 1

où Z' représente $SO_2$ ou un groupe alkylène en $C_1$ à $C_3$, ou représente l'un des restes cyclohexylène isomériques ou un reste de formule :

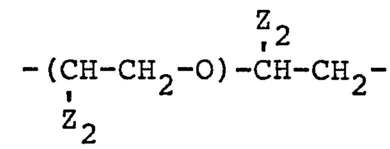

1 à n

dans laquelle $Z_2$ représente H, $CH_3$ et n = 50, de préférence 10, de leurs éthers, de leurs époxydes ou du 3-chloropropane-1,2-diol,

b) d'acides carboxyliques de formule :

HOOC—A—COOH

de leurs anhydrides, de leurs halogénures d'acides ou de leurs esters, où

A est un groupe alkylène ayant 1 à 10 atomes de carbone, un groupe alcénylène ayant 2 à 10 atomes de carbone, l'un des restes phénylène ou cyclohexylène isomériques, les restes alkylène pouvant être substitués par un groupe acide sulfonique et

c) d'acide phosphorique, de ses anhydrides, de ses halogénures ou de ses oxyhalogénures, à 120-260 °C pendant une période de réaction allant jusqu'à 48 heures, la proportion molaire a : b : c étant égake à 1 : 0 à 1,5 : 0,05 à 1,5 et la somme des nombres de moles de b et c représentant des 2/3 aux 3/2 de a, puis ils sont transformés éventuellement en leurs sels de métaux alcalins, de métaux alcalino-terreux ou d'ammonium, le groupe ammonium répondant à la formule :

$$\overset{\oplus}{N}(R_2)_4$$

où $R_2$ = H, un groupe alkyle en $C_1$ à $C_{14}$, de préférence un groupe alkyle en $C_1$ à $C_6$ qui peut être substitué par un radical hydroxyle, un groupe phényl(alkyle en $C_1$ à $C_6$), qui peut être substitué dans le noyau phénylique par un radical méthyle.

2. Esters d'acide phosphorique suivant la revendication 1, caractérisés en ce qu'ils sont préparés à partir a) d'éthane-1,2-diol, de propane-1,2-diol, de propane-1,3-diol, de butane-1,2-diol, de butane-1,3-diol, de butane-2,3-diol, de butane-1,4-diol, de 3-chloropropane-1,2-diol, d'hexane-1,6-diol, de glycérol, de tris-hydroxyméthylpropane, de diéthanolamine, de triéthanolamine, de bis-(2-hydroxyéthoxy)-benzène, de bis-(2-hydroxyéthoxydiphényl)-propane, de cyclohexanediol, de diéthylèneglycol, de triéthylèneglycol, de tétraéthylèneglycol, d'oxyde d'éthylène ou d'oxyde de propylène et b) d'anhydride d'acide maléique, d'anhydride d'acide phtalique, d'anhydrique d'acide succinique, d'acide malonique, d'acide glutarique, d'acide adipique, d'acide sébacique, d'acide fumarique, d'acide isophtalique, d'acide téréphtalique, d'ester diméthylique d'acide téréphtalique, d'acide cyclohexane-1,4-dicarboxylique ou d'acide sulfo-succinique et c) d'acide phosphorique, d'acide polyphosphorique, de pentoxyde de phosphore ou d'oxychlorure de phosphore à 150-200 °C pendant une durée de réaction allant jusqu'à 15 heures, la proportion molaire a : b : c étant égale à 1 : 0,04 à 1,2 : 0,07 à 1,3 et la somme des nombres de moles de b) et c) représentant des 3/4 aux 4/3 de a).

3. Utilisation d'esters d'acide phosphorique suivant la revendication 1 comme dispersants, fluidifiants, agents d'unisson, émulsionnants, adjuvants pour détergents.